# EUROPEAN PATENT APPLICATION

(11) **EP 2 933 722 A1**
(43) Date of publication of application: **21.10.2015**
(21) Application number: 14305558.0
(22) Date of filing: 15.04.2014
(51) Int. Cl.: G06F 9/455, G06F 9/445

(54) **Method and system for accelerated virtual machine instantiation by a virtual machine manager within a scalable computing system, and computer program product**

(71) Applicant: ALCATEL LUCENT, 92100 Boulogne-Billancourt (FR)
(72) Inventor: Cucinotta, Tommaso, Dublin, 15 (IE)
(74) Representative: Greenwood, Matthew David

(57) **Abstract**

A method for virtual machine instantiation in a virtualised system, comprising generating a logical file system for a virtual machine instantiated using a hypervisor of the system executing on physical computing hardware, the file system referencing a set of read-only file system portions independently mountable by the virtual machine and stored in a read-only storage repository portion for the system, respective portions representing at least one version of at least one software component to be executed by the virtual machine instance.

## Description

### TECHNICAL FIELD

The present invention relates generally to the field of virtual machine instantiation.

### BACKGROUND

Cloud computing using virtualised systems introduces on-demand provisioning of resources, by which customers may save on the costs of IT assets and infrastructures, by exploiting elastic computing models in which they can rent on the fly as many resources as needed. Machine virtualization plays an important role in current cloud computing infrastructures thanks to its capability to host completely independent, isolated and potentially heterogeneous operating system (OS) environments (such as Linux, Windows server and others), as well as allowing them to be live-migrated while they are running with very negligible down-time. Often, virtualized software components in the cloud are deployed in form of virtual machines (VMs) that can be elastically scaled out, meaning that, whenever the capacity of one VM becomes saturated it is possible to spawn a new VM for the same component so as to increase the processing capacity of that component by spreading, or load-balancing, the work-load among various instances of it, deployed in form of multiple VMs for example.

However, the potential of this technology is impaired by the speed at which new VM instances can be created when needed. In typical cloud environments, this time can take up to several minutes, where the time needed to boot-up the operating system within a VM often constitutes a significant part of said time, and it is particularly affected by the need to load several hundreds of MBs from the VM image stored in the cloud on persistent storage media normally available through the network (e.g., network-attached storage or similar).

As a consequence, in current elastic cloud deployments, spawning of new VMs is heavily impaired by the need to load, often multiple times, identical pieces of software from storage, and this adds to the inertia that has to be accounted for by developers when realizing elasticity logic, ultimately impairing the potential of elastic cloud deployments. The same reasoning applies to when any software within a given VM is to be started, not only and non-necessarily at boot time, but also during the normal run-time.

### SUMMARY

According to an example, there is provided a method for virtual machine instantiation in a virtualised system, comprising generating a logical file system for a virtual machine instantiated using a hypervisor of the system executing on physical computing hardware, the file system referencing a set of read-only file system portions independently mountable by the virtual machine and stored in a read-only storage repository portion for the system, respective portions representing at least one version of at least one software component to be executed by the virtual machine instance. Read-write file system portions corresponding to at least some of respective ones of the read-only file system portions of the file system of the virtual machine can be provided in storage directly addressable and allocated for the virtual machine instance. Respective ones of the set of read-only file system portions can be referenced in the logical file system of the virtual machine using links to the said read-only file system portions stored in the read-only storage repository portion. The links can be symbolic links for example. At least one of the read-only file system portions can be a shared portion mountable by multiple independent virtual machines of the system. A read-write file system portion can be exclusive to the said virtual machine instance. The at least one software component can be a component of an operating system distribution or application to be executed by the virtual machine instance. The virtual machine can be an execution environment in the form of a container for the system that is isolated from other virtual machines in program execution over the physical computing hardware resources.

According to an example, there is provided a scalable computing system, including a hypervisor executing on physical computing hardware and operable to instantiate a virtual machine with a logical file system referencing a set of read-only file system portions independently mountable by the virtual machine and stored in a read-only storage repository portion of the system, respective portions representing at least one version of at least one software component to be executed by the virtual machine instance. The system can include a read-write storage repository to store and to enable read-write access to read-write file system portions allocated for the virtual machine instance and corresponding to at least some of respective ones of the read-only file system portions of the file system of the virtual machine. At least one of the read-only file system portions can be a shared portion mountable by multiple independent virtual machines of the system. A portion of memory of the physical hardware can be used to cache a read-only file system portion and to make such a memory portion accessible to multiple VMs. The virtual machine can be an execution environment in the form of a container for the system that is isolated from other virtual machines in program execution over the physical computing hardware resources of the system.

According to an example, there is provided a virtual machine instance executable on physical computing hardware and instantiable using a hypervisor of a virtualised system, the virtual machine including logical file system referencing a set of read-only file system portions independently mountable by the virtual machine and stored in a read-only storage repository portion of the system, respective portions representing at least one version of at least one software component to be executed by the virtual machine instance.

According to an example, there is provided a computer program product, comprising a computer usable medium having computer readable program code embodied therein, said computer readable program code adapted to be executed to implement a method for virtual machine instantiation in a virtualised system as provided herein. The computer program product can be in the form of a platform as a service (PaaS) tool deployed for the virtualised system and operable to receive user input relating to a virtual machine to be instantiated and to automatically generate the logical file system for the virtual machine.

### BRIEF DESCRIPTION OF THE DRAWINGS

Embodiments will now be described, by way of example only, with reference to the accompanying drawings, in which:
Figure 1 is a schematic representation of a virtualised system according to an example;
Figure 2 is a further schematic representation of a virtualised system according to an example; and
Figure 3 is a further schematic representation of a virtualised system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Often, multiple virtual machines (VMs) deployed on the same physical machine happen, by chance, to share a non-negligible part of their software base. For example, multiple VMs relying on the same version of a given Linux distribution, or multiple VMs relying on different Linux distributions having been published in similar periods, thus containing many software packages with exactly the same version and compilation options. However, this information is typically not readily available anywhere in the infrastructure, therefore the run-time cloud management system cannot leverage it. Specifically, consider a VM that has already been booted on a physical system, and is running therein. When booting a second VM on the same physical system, the latter needs to fetch from the corresponding on-disk VM image all the software and data that is needed to be processed even though they often happen to be identical to the ones already loaded to boot the first VM, and thus already available in the main memory of the physical system.

According to an example, there is provided a system and method to reduce the time to instantiate new VMs in a virtualised system and more generally to instantiate new software components or services by reducing the time needed to fetch software (and data) from either local or remotely available persistent storage devices, in those many cases in which multiple VMs share the same set of software packages.

According to an example, VM images in a virtualised system such as a cloud infrastructure for example can be created so that it is possible to identify any identical software and data packages that other VM images that have been deployed possess, thereby leading to significant savings in terms of time needed to load software and data to be processed for the first time within a VM, such as at VM boot time, and also in terms of storage space needed to store the VM images. This is done without the expensive computing and disk access penalties incurred by deduplication techniques.

A logical file system for a VM is generated in which the file system references a set of read-only file system portions independently mountable by the VM and stored in a read-only storage repository portion for the system, such as in a network-attached storage device for example. A read-only file system portion can include one or more data portions for an application or part of an application that can be static and/or non-modifiable for example. Such a portion can be accessed by multiple VMs or other devices contemporaneously. A portion can be updated, replaced or removed by an administrator for example, so that an application can be updated, replaced or removed and so on. In an example, a read-only portion can be mounted and read by one or more VMs, which are not able to alter the portion by writing data to it or removing it from the device storing the portion. However, as noted above, an administrator may alter a read-only portion in some way, including removing it, and this can be effected via a VM, such as an administration VM that is instantiated for an administrator for example. In an example, a read-only storage repository portion for the system stores one or more read-only file system portions to be mounted and accessed by one or more VMs. The repository can also store other file system portions, such as read-write file system portions to be mounted and accessed by VMs. In an example, read-only portions can be stored in privileged or reserved area of the storage repository portion. A storage repository portion can be a partition of a storage device for example.

Each read-only file system portion can be mounted separately and can correspond to one or more packages of a software distribution or application, including the often many different available versions of them. The VM can be instantiated using a hypervisor of the system executing on physical computing hardware for example, and the physical hardware can be provided with or linked to the read-only storage repository portion.

For example, a VM might contain thousands of installed standard software packages. An equivalent file-system can be generated for the VM in which remotely mounted read-only file systems portions are provided and used, respective portions corresponding to a software package for example. The only information that needs to actually reside in the specific file-system of a VM is therefore the set of configuration files and data to be processed, plus possible additional custom, non-standard software to be deployed within the VM. Therefore, the on-disk image file of a VM is collapsed into a much smaller file containing purely:
- a set of file-system configuration data for the VM, determining which read-only file system portions among the available ones are mounted and where in the overall logical file-system of the VM;
- software configuration and data specifying, for each of the software contained within a shared file system portion, what the specific configurations and data to be made available to them are, such as services configuration files, database configuration files and contents and so on;
- VM-specific software that cannot be made available as file system portion within the virtualised system, such as portions being peculiar only to a specific VM or a specific customer having deployed custom software, along with its accompanying data.

Customers of a cloud infrastructure can be provided with PaaS (platform as a service) tools to make the above process almost seamless for the user. For example, it is possible to replace the command normally used to install new packages within the OS (e.g., apt-get in a Debian-based OS, or rpm in a RedHat-based one), with a command that actually identifies the packages on the remotely available large network attached storage of the cloud provider, and attaches those file system portions to the current VM image, plus it runs any post-installation script that is needed to further configure the software. This accelerates the process of deploying software in a VM: instead of downloading a compressed archive containing the software, uncompressing it, copying the uncompressed files onto their target locations within the file-system, and running the post-installation scripts, now we have only to mount the already uncompressed software available as a remote file system portion from the cloud provider, and directly run the post-installation scripts.

Accordingly, various VMs running on the same physical host can mount many identical remote file system portions. The hypervisor is aware of this fact, thus it does not need to replicate these data blocks into the main memory, nor does it need to load these data blocks several times if they are already available in the main memory, nor does it have to run any expensive deduplication algorithm in order to identify these identical data blocks.

As a consequence, when spawning a new VM onto a physical host, most of the software to be run in the bootstrap process of the VM is likely already cached and available in the physical memory of the hypervisor. This can be detected because the new VM mounts many remote file system portions that are already mounted by other VMs that are already deployed and running on the same physical host.

Therefore, the new VM boots much faster. Furthermore, if during run-time the VM needs some software to launch for the first time, if the same software has already been launched and used by some other VM on the same physical system, it is likely that the corresponding data blocks are already in the main memory of the physical host, so there is no need to actually fetch this data from the remote storage, resulting in a much faster bootstrap of the software or service.

The expected improvement depends on the bandwidth available between the physical host running the VM and the storage device(s) where the file system portions are stored, and on how many packages or file system portions are actually already mounted on the same host, when a new VM needs to be started.

Traditional UNIX file-systems are laid out according to a structure that impairs the possibility of hosting multiple versions of different software packages and makes them co-exist. Indeed, it is commonplace to have a set of folders containing binary executable programs (/bin),

libraries (/lib), configuration files (/etc), run-time data and logs (/var), mounted file-systems (/mnt), and so on below the root folder of the file-system "/" . Now, each software package is normally uncompressed in such a way that, for example, its executable binaries are placed in the /bin folder, and another version of the same package would drop in the /bin folder the same executable binaries which overlap in names with the corresponding ones from the other version. Therefore, the two packages clash with each other and cannot be installed at the same time. A special case is the one of shared libraries. It is commonplace that these are installed with a file-name representing the library version, so that multiple versions of the library can be installed and co-exist on the same system, and different executable binaries can use different versions of the same library, if needed. Note that some package management tools have specific options that allow a system administrator to actually install the packages in different sub-folders.

As an example, the file-system of a Linux-based VM can be laid out with most of the software mounted through file system portions. Thus, it would be possible to have the package mysql-server-core-5.5 mounted in the VM logical file-system within the tree rooted at: /mnt/mysql-server-core-5.5 for example. This means that the corresponding executable binary would be located as /mnt/mysql-server-core-5.5/usr/bin/mysqld, rather than the standard location /usr/bin/mysqld. However, all that is needed within the VM logical file-system image to keep finding the mysqld executable is either a symbolic link from /usr/bin/mysqld to /mnt/mysql-server-core-5.5/usr/bin/mysqld, or the addition of the /mnt/mysql-server-core-5.5/usr/bin executables path to the PATH environment variables. A similar reasoning applies to library files for a package. Therefore, a VM image file can contain all the configurations that are needed to make all the software needed within a VM image, but available through remote network-attached file system portions, seamlessly available as if it were installed inside the VM file-system itself. As mentioned above, this can be obtained, automated and made seamless for administrators customizing their VMs rented in the cloud infrastructure by providing some customized version of the common package management tools normally used to install/uninstall packages on the initial VM images from which customers start working.

In alternative example, the granularity at which a full OS image is split into file system portions can be a coarser granularity, for example handling packages in logically grouped subsets that are often used together.

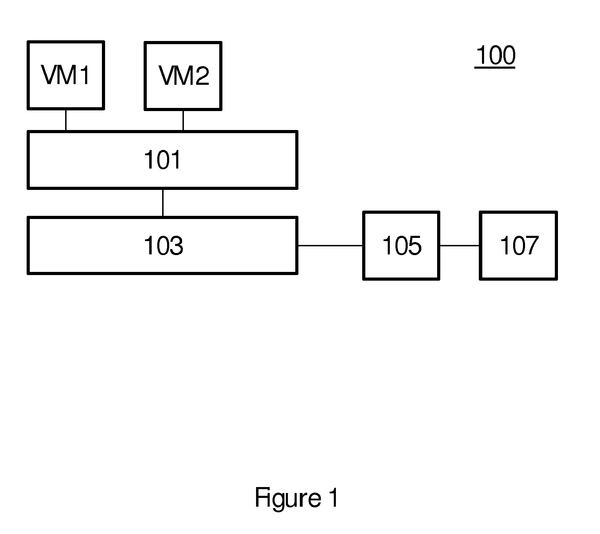

Figure 1 is a schematic representation of a virtualised system according to an example. Multiple virtual machine instances VM1, VM2 are executing over physical hardware resources 103 of the system 100 by way of a hypervisor or virtual machine monitor 101. A read-only storage repository portion for the system 100 such as network attached storage device 105 provides storage for a set of read-only file system portions 107 that are independently mountable by the virtual machines VM1, VM2.

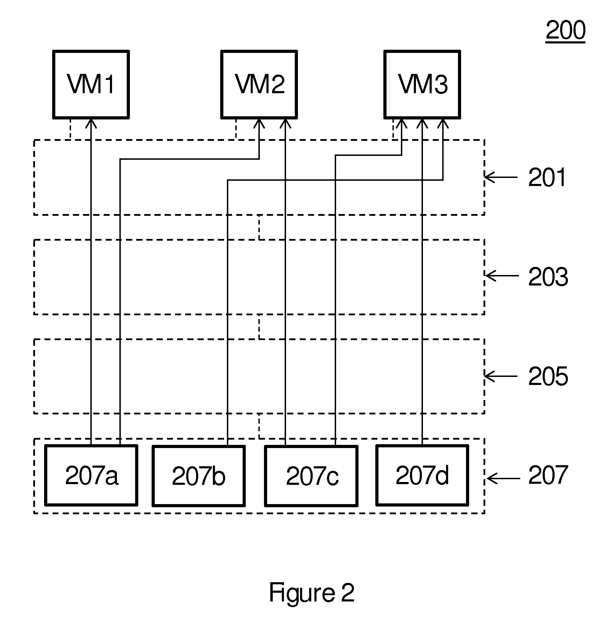

Figure 2 is a schematic representation of a virtualised system according to an example. Similarly to figure 1, multiple virtual machine instances VM1, VM2, VM3 are executing over physical hardware resources 203 of the system 200 by way of a hypervisor or virtual machine monitor 201. A read-only storage repository portion for the system 200 such as network attached storage device 205 provides storage for a set of read-only file system portions 207a-d that are independently mountable by the virtual machines VM1, VM2, VM3. As can be seen from figure 2, VM1 mounts portion 207a, VM2 mounts portions 207a and 207b, and VM3 mounts portions 207b, 207c, 207d.

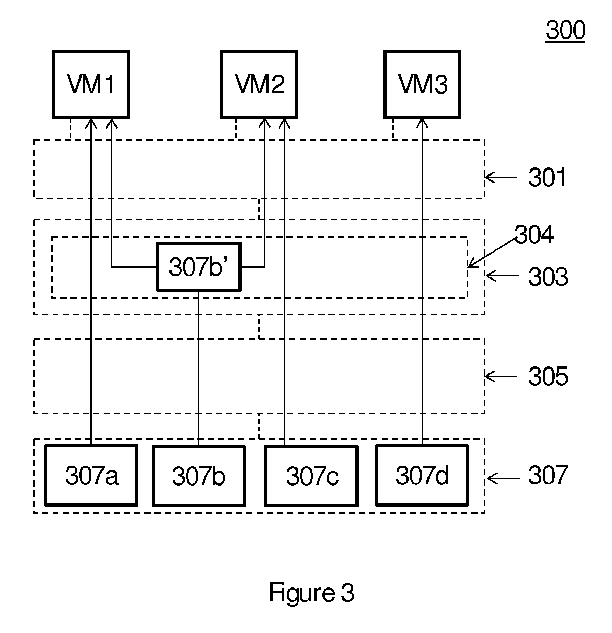

Figure 3 is a schematic representation of a virtualised system according to an example. Multiple virtual machine instances VM1, VM2, VM3 are executing over physical hardware resources 303 of the system 300 by way of a hypervisor or virtual machine monitor 301. A read-only storage repository portion for the system 300 such as network attached storage device 305 provides storage for a set of read-only file system portions 307a-d that are independently mountable by the virtual machines VM1, VM2, VM3. In the example of figure 3, it has been recognised by hypervisor 301 that portion 307b is to be mounted by both VM1 and VM2. Accordingly, the area 307b' of RAM 304 in physical hardware resources 303 that are reserved for portion 307b can be addressed by both VM1 and VM2. That is, as noted above, since the VMs are executing on the same physical host 303, data blocks associated with file system portions that are to be used by more than one VM need not be loaded multiple times.

A virtualised system as shown in and described with reference to figures 1 to 3 is a scalable computing system in which a hypervisor executes on the physical computing hardware and is operable to instantiate one or more VMs for the system. In an example, the scalable system is used to instantiate a VM with a logical file system that references a set of read-only file system portions that are independently mountable by the VM and stored in a read-only storage repository portion of the system, respective portions representing at least one version of at least one software component to be executed by the VM instance. The VM instance can thus be used to scale an application or application part in order to provide an additional instance (or an instance if there were previously none executing) for the application or part.

As used herein, the term virtual machine is not intended to be limiting. For example, a virtual machine can be in the form of an execution environment in the form of a container, or by way of OS-level virtualization for example. Accordingly, different isolated containers, or namespaces, or execution environments, residing in the same OS, but sufficiently isolated so that they are essentially executing in a exclusive OS environment can be used.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for virtual machine instantiation in a virtualised system, comprising:
generating a logical file system for a virtual machine instantiated using a hypervisor of the system executing on physical computing hardware, the file system referencing a set of read-only file system portions independently mountable by the virtual machine and stored in a read-only storage repository portion for the system, respective portions representing at least one version of at least one software component to be executed by the virtual machine instance.

2. A method as claimed in claim 1, wherein read-write file system portions corresponding to at least some of respective ones of the read-only file system portions of the file system of the virtual machine are provided in storage directly addressable and allocated for the virtual machine instance.

3. A method as claimed in claim 1 or 2, wherein respective ones of the set of read-only file system portions are referenced in the logical file system of the virtual machine using links to the said read-only file system portions stored in the read-only storage repository portion.

4. A method as claimed in any preceding claim, wherein at least one of the read-only file system portions is a shared portion mountable by multiple independent virtual machines of the system.

5. A method as claimed in any preceding claim, wherein a read-write file system portion is exclusive to the said virtual machine instance.

6. A method as claimed in any preceding claim, wherein the at least one software component is a component of an operating system distribution or application to be executed by the virtual machine instance.

7. A method as claimed in any preceding claim, wherein the virtual machine is an execution environment in the form of a container for the system that is isolated from other virtual machines in program execution over the physical computing hardware resources.

8. A scalable computing system, including a hypervisor executing on physical computing hardware and operable to instantiate a virtual machine with a logical file system referencing a set of read-only file system portions independently mountable by the virtual machine and stored in a read-only storage repository portion of the system, respective portions representing at least one version of at least one software component to be executed by the virtual machine instance.

9. A scalable computing system as claimed in claim 8, wherein the system includes a read-write storage repository to store and to enable read-write access to read-write file system portions allocated for the virtual machine instance and corresponding to at least some of respective ones of the read-only file system portions of the file system of the virtual machine.

10. A scalable computing system as claimed in claim 8 or 9, wherein at least one of the read-only file system portions is a shared portion mountable by multiple independent virtual machines of the system.

11. A scalable computing system as claimed in any of claims 8 to 10, further operable to use a portion of memory of the physical hardware to cache a read-only file system portion and to make such a memory portion accessible to multiple VMs.

12. A scalable computing system as claimed in any of claims 8 to 11, wherein the virtual machine is an execution environment in the form of a container for the system that is isolated from other virtual machines in program execution over the physical computing hardware resources of the system.

13. A virtual machine instance executable on physical computing hardware and instantiable using a hypervisor of a virtualised system, the virtual machine including logical file system referencing a set of read-only file system portions independently mountable by the virtual machine and stored in a read-only storage repository portion of the system, respective portions representing at least one version of at least one software component to be executed by the virtual machine instance.

14. A computer program product, comprising a computer usable medium having computer readable program code embodied therein, said computer readable program code adapted to be executed to implement a method for virtual machine instantiation in a virtualised system as claimed in any of claims 1 to 7.

15. A computer program product as claimed in claim 14, in the form of a platform as a service (PaaS) tool deployed for the virtualised system and operable to receive user input relating to a virtual machine to be instantiated and to automatically generate the logical file system for the virtual machine.
